# EUROPEAN PATENT APPLICATION

(11) **EP 3 010 238 A2**
(43) Date of publication of application: **20.04.2016**
(21) Application number: 15189925.9
(22) Date of filing: 15.10.2015
(51) Int. Cl.: H04N 21/41, H04H 60/80, H04N 21/431, H04N 21/44, H04N 21/442, H04N 21/462, H04N 21/4722, H04N 21/81

(54) **METHOD OF PROVIDING INFORMATION AND ELECTRONIC DEVICE IMPLEMENTING THE SAME**

(30) Priority: 16.10.2014 KR 20140140087
(71) Applicant: Samsung Electronics Co., Ltd., Gyeonggi-do 16677 (KR)
(72) Inventor: CHOI, Yoonhee, 16677 Gyeonggi-do (KR); PARK, Heeseon, 16677 Gyeonggi-do (KR); JUNG, Taeung, 16677 Gyeonggi-do (KR); CHOI, Ilhwan, 16677 Gyeonggi-do (KR)
(74) Representative: Jacobs, Bart

(57) **Abstract**

Disclosed are a method of providing information and an electronic device for implementing the same. The method includes: maintaining a fingerprint database; extracting a fingerprint from broadcasting contents; acquiring content identification information on a stored fingerprint, which matches the extracted fingerprint, from the fingerprint database; transmitting the content identification information to a first external device; receiving additional information related to the content identification information from the first external device; and displaying the additional information.

## Description

The present disclosure relates generally to a method of efficiently providing an additional service related to broadcasting contents.

Advertisements using broadcasting contents are aimed at unspecified individuals. However, the advertisements aimed at the unspecified individuals have smaller advertising effects compared to targeted advertisements aimed at specific targets. An important issue of the targeted advertisement is how accurately the specific targets are selected. This is because, due to the characteristics of broadcasting contents, it is difficult to accurately determine targets who view the broadcasting contents.

To address the above-discussed deficiencies, it is a primary object to provide a targeted advertisement using broadcasting contents, a display device that displays broadcasting contents informs an advertisement server of the currently displayed broadcasting contents and the advertisement server provides an advertisement that matches the broadcasting contents to the display device in the prior art. To this end, the display device transmits information for the matching (recognition) of the currently displayed broadcasting contents to the advertisement server and the advertisement server should search for a matching advertisement in real time and transmits the found advertisement to the display device. However, since the advertisement should be transmitted to the display device within a short time due to the characteristics of the advertisement, if there are many display devices making a request for advertisement matching or there is an error such as a network delay, the time when the advertisement is provided can be delayed. Further, if the time when the advertisement is provided is delayed, the advertisement cannot be provided at the right time, so that a targeted advertisement effect cannot be acquired.

An aspect of various embodiments is to provide a method and an apparatus for matching an advertisement with broadcasting contents directly by a medium that displays the advertisement and directly displaying the matching advertisement in order to solve the generation of an advertisement provision delay time due to excessive advertisement matching requests and the network delay.

In accordance with an aspect of the present disclosure, a method of providing information by an electronic device is provided. The method includes: maintaining a fingerprint database; extracting a fingerprint from broadcasting contents; acquiring content identification information on a stored fingerprint, which matches the extracted fingerprint, from the fingerprint database; transmitting the content identification information to a first external device; receiving additional information related to the content identification information from the first external device; and displaying the additional information. The method can include providing pre-stored additional information related to the content identification information in the electronic device instead of transmitting the content identification information to the first external device and receiving the additional information after acquiring the content identification information.

In accordance with another aspect of the present disclosure, an electronic device is provided. The electronic device includes: a database configured to store a fingerprint according to each piece of content identification information and an offset; a controller configured to extract a stored fingerprint from broadcasting contents and acquire content identification information on a fingerprint, which matches the extracted fingerprint, from the fingerprint database; a communication unit configured to transmit the content identification information to a first external device and receiving additional information related to the content identification information from the first external device; and a display unit configured to display the additional information.

In accordance with another aspect of the present disclosure, a system for providing information is provided. The system includes: a communication unit configured to communicate with an external device; a database including at least one of a fingerprint according to each piece of content identification information, an offset, additional information, and log information; a content management unit configured to extract a fingerprint from broadcasting contents, transmit the extracted fingerprint to the external device through the communication unit, and manage whether the database is updated; an information provision unit configured to provide additional information corresponding to the content identification information to the external device through the communication unit; and an analysis unit configured to collect log information from the external device through the communication unit and analyze the log information.

According to various embodiments, a medium that displays additional information can directly match an advertisement with broadcasting contents and directly provide the matching additional information.

According to various embodiments, it is possible to rapidly recognize additional information that matches the broadcasting contents and improve the accuracy.

According to various embodiments, it is possible to stably provide additional information that matches the broadcasting contents regardless of a use amount of the electronic device or a network state.

According to various embodiments, it is possible to minimize server accesses and thus reduce network and server burden.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

For a more complete understanding of the present disclosure and its advantages, reference is now made to the following description taken in conjunction with the accompanying drawings, in which like reference numerals represent like parts:
FIGs. 1A and 1B illustrate a service platform between a client and a server according to various embodiments of the present disclosure;
FIG. 2 illustrates a configuration of a first client according to various embodiments of the present disclosure;
FIG. 3 illustrates a configuration of a second client according to various embodiments of the present disclosure;
FIG. 4 illustrates a method of constructing a local fingerprint DB according to various embodiments of the present disclosure;
FIG. 5 illustrates a structure of the local fingerprint DB according to various embodiments of the present disclosure;
FIGs. 6A and 6B illustrate a method of providing additional information according to various embodiments of the present disclosure;
FIGs. 7A, 7B, and 7C illustrate examples of additional information according to various embodiments of the present disclosure;
FIG. 8 illustrate a method of collecting log information according to various embodiments of the present disclosure;
FIGs. 9A and 9B illustrate a method of providing detailed information to the second client according to various embodiments of the present disclosure; and
FIGS. 10A, 10B, 10C, 10D, 10E and 10F illustrate examples of detailed information according to various embodiments of the present disclosure.

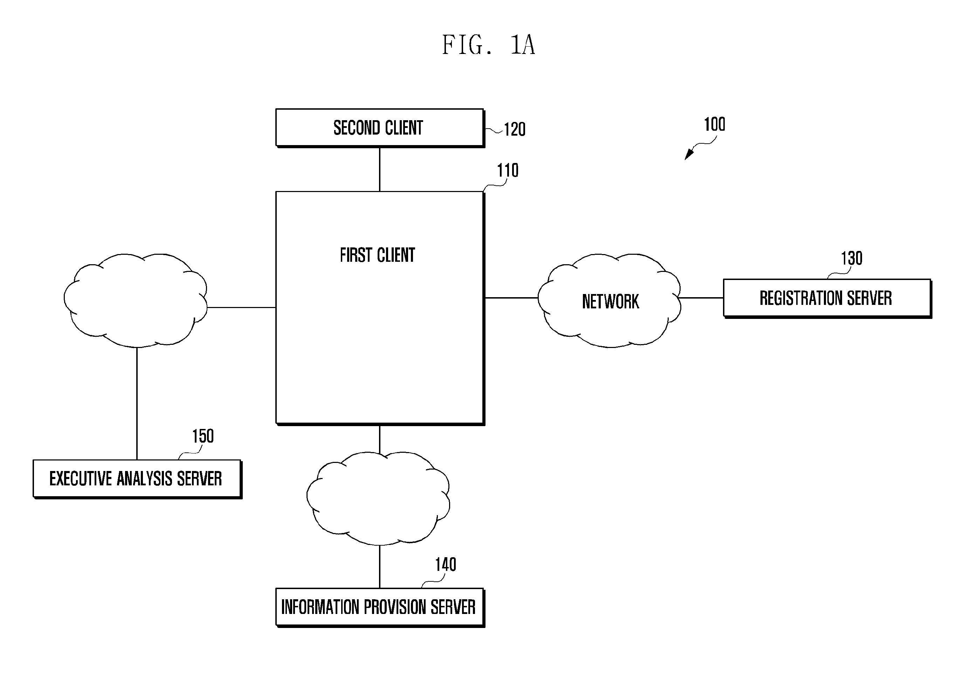

FIGURES 1A through 10F, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system. Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals can be used to designate similar constituent elements.

As used herein, the expression "have," "can have," "include," or "can include" refers to the existence of a corresponding feature (e.g., numeral, function, operation, or constituent element such as component), and does not exclude one or more additional features.

As used herein, the expression "A or B," "at least one of A and/or B," or "one or more of A and/or B" can include any or all possible combinations of items enumerated together. For example, the expression "A or B," "at least one of A and B," or "at least one of A or B" can include (1) at least one A, (2) at least one B, or (3) both at least one A and at least one B.

The expression "a first," "a second," "the first," or "the second" used in various embodiments of the present disclosure can modify various components regardless of the order or the importance but does not limit the corresponding components. The above expressions are used merely for the purpose of distinguishing an element from the other elements. For example, a first user device and a second user device indicate different user devices although both of them are user devices. For example, a first element can be termed a second element, and similarly, a second element can be termed a first element without departing from the scope of the present disclosure.

It should be understood that when an element (e.g., first element) is referred to as being (operatively or communicatively) "connected," or "coupled," to another element (e.g., second element), it can be directly connected or coupled directly to the other element or any other element (e.g., third element) can be interposer between them. In contrast, it can be understood that when an element (e.g., first element) is referred to as being "directly connected," or "directly coupled" to another element (second element), there are no element (e.g., third element) interposed between them.

The expression "configured to" used in the present disclosure can be exchanged with, for example, "suitable for", "having the capacity to," "designed to," "adapted to," "made to," or "capable of" according to the situation. The term "configured to" can not necessarily imply "specifically designed to" in hardware. Alternatively, in some situations, the expression "device configured to" can mean that the device, together with other devices or components, "is able to." For example, the phrase "processor adapted (or configured) to perform A, B, and C" can mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms can include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude embodiments of the present disclosure.

For example, the electronic device can include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

According to some embodiments, the electronic device can be a smart home appliance. The home appliance can include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., SAMSUNG HOMESYNC, APPLE TV, or GOOGLE TV), a game console (e.g., XBOX and PLAYSTATION), an electronic dictionary, an electronic key, a camcorder, and an electronic photo frame.

According to another embodiment, the electronic device can include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device can include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure can be a combination of one or more of the aforementioned various devices. The electronic device according to some embodiments of the present disclosure can be a flexible device. Further, the electronic device according to various embodiments of the present disclosure is not limited to the aforementioned devices, and can include a new electronic device according to the development of technology

The term "screen" used in various embodiments can refer to a screen of a display unit. For example, in the sentence "broadcasting contents are displayed on the screen," "the display unit displays broadcasting contents on the screen," or "the controller controls the display unit to display broadcasting contents on the screen," the screen can be used as the "screen of the display unit". Meanwhile, the term "screen" can refer to a target to be displayed on the display unit. For example, in the sentence "a broadcasting screen is displayed," "the display unit displays the broadcasting screen" or "the controller controls the display unit to display the broadcasting screen," the screen can be used as a target to be displayed.

According to various embodiments, a client, a server, and an external device is an electronic device having at least one function of broadcast reception and communication functions. The term "external device" refers only to another electronic device from a viewpoint of one electronic device, and it should be understood that the term "external" does not limit a function or operation of the corresponding device. Further, the terms "client" and "server" refer only to devices that make a request for some information and provide information in response to the request from relative viewpoints, and it should be understood that the terms "client" and "server" do not limit functions or operations of the corresponding devices.

Hereinafter, various embodiments of the present disclosure will be described with reference to the accompanying drawings.

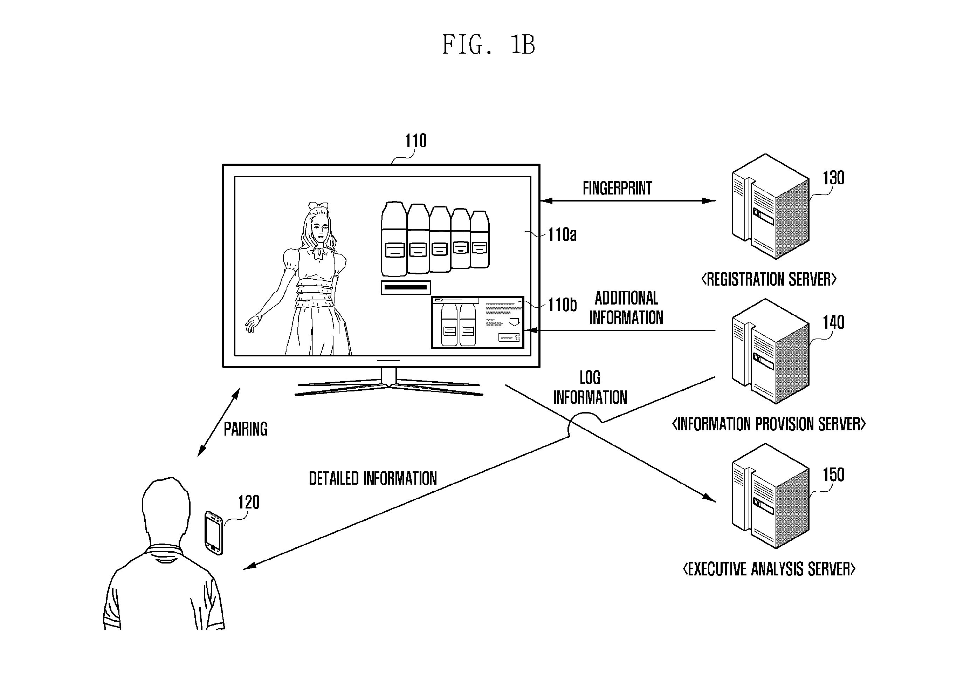

FIGs. 1A and 1B illustrate a service platform between a client and a server according to various embodiments of the present disclosure.

Referring to FIGs. 1A and 1B, a system 100 according to various embodiments of the present disclosure can include a first client 110, a second client 120, a registration server 130, an information provision server 140, and an executive analysis server 150.

The first client 110 is a display device corresponding to a medium that provides broadcasting contents (for example, reference numeral 110a). Although a "smart TV" is hereinafter described as an example of the first client 110 due to the characteristics of the broadcasting contents, the first client 110 is not limited to the smart TV by the description. The first client 110 includes a local fingerprint DB and a local additional information DB.

The first client 110 receives a fingerprint from the registration server 130 and stores the received fingerprint in the local fingerprint DB. The fingerprint is information for identifying broadcasting contents and is interchangeable with an identifier or identification information. The broadcasting contents 110a refers to broadcasted contents, for example, "advertisements." The local fingerprint DB includes content identifications (IDs) according to each DB broadcasting content and one or more fingerprints and offsets corresponding to the content IDs. In certain embodiments, the broadcasting contents 110a correspond to dynamic images and include a plurality of frames (for example, 60 frames/second). Accordingly, the fingerprint is stored in the unit of frames. Further, in one dynamic image, fingerprints are distinguished by identification information (for example, offset). The offset refers to an individual frame location defined within the broadcasting contents. For example, the fingerprint allocated an offset "1" indicates a first frame of the displayed corresponding dynamic image and the fingerprint allocated an offset "10" refers to a tenth frame. The first client 110 identifies whether the fingerprint is updated through an interworking with the registration server 130 and renews the local fingerprint DB.

The first client 110 receives additional information (for example, reference numeral 110b) from the information provision server 140 and stores the received additional information in the local additional information DB. The additional information 110b corresponds to information related to broadcasting contents, and is analyzed as, for example, "targeted advertisements." The additional information 110b can include two types such as an image and a video. When the additional information 110 corresponds to the image, the additional information 110b is output together with the broadcasting contents 110a in a banner form. When the additional information 110b corresponds to the "video," the additional information 110b is output instead of the broadcasting content 110a. The local additional information DB includes a list containing one or more offsets and one or more pieces of additional information in accordance with the content IDs. That is, the local additional information DB includes additional information according to each offset (or each time) with respect to one content ID.

For example, with respect to a content ID "10", the local additional information DB include additional information A having an offset "100," additional information B having an offset "200", and additional information C having an offset "300." The offset indicates an individual frame location within the broadcasting contents. Accordingly, when one broadcasting content is displayed, the first client 110 selectively displays additional information A to C in consideration of a time point when the content ID, which matches the broadcasting content is "10" from a time point when the broadcasting content is displayed.

According to various embodiments, the local additional information DB further includes a targeting condition according to each piece of additional information. The first client 110 selects one of a plurality of pieces of additional information based on the targeting condition.

Further, the first client 110 provides broadcasting contents and extracts a fingerprint from the provided broadcasting contents. The broadcasting contents are waiting to be displayed or are being displayed through the display unit. Providing the broadcasting contents refers to displaying the broadcasting contents through the display unit and outputting a sound through a speaker. The extraction process includes, for example, a process of converting at least one frame into a digit string and a process of designating an offset to the digit string (fingerprint) based on an order of the corresponding frame.

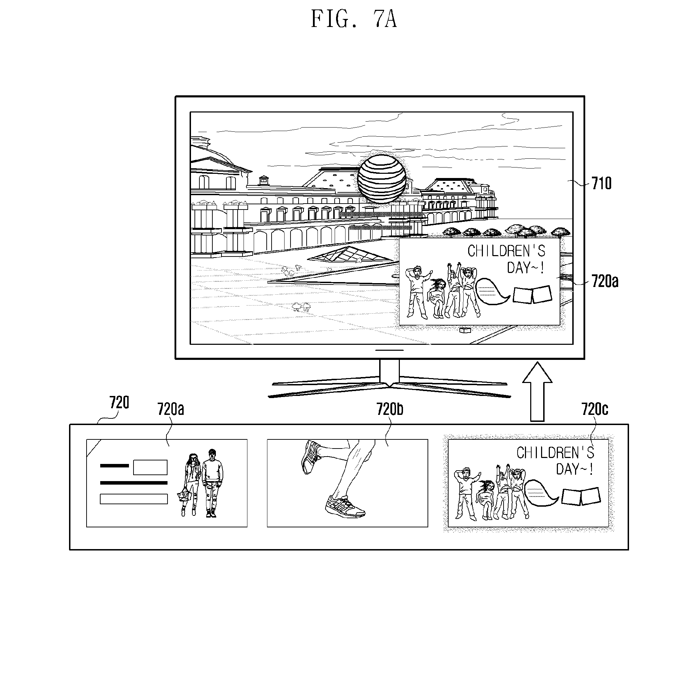

The first client 110 searches for a content ID corresponding to the extracted fingerprint in the local fingerprint DB. The first client 110 searches for additional information that matches the found content ID in the local fingerprint DB. For example, when a viewer of the broadcasting contents is a woman in her thirties, the first client 110 selects additional information having a targeting condition set as "woman in her thirties" from pieces of additional information corresponding to the content ID and displays both the broadcasting contents and the additional information at the same time or only the additional information. Further, based on the targeting condition, a plurality of pieces of additional information is selected. In certain embodiments, the selected pieces of additional information are sequentially or simultaneously displayed. A method of displaying the additional information based on the targeting condition will be described in detail with reference to FIGs. 7A to 7C below. When there is no additional information corresponding to the content ID, the first client 110 makes a request for additional information to the information provision server 140.

The first client 110 collects log information according to displaying of the additional information and transmit the collected log information to the executive analysis server 150. The log information includes user's viewing histories of the broadcasting contents and a user reaction to the additional information.

The second client 120 interworks with the first client 110 to perform a function related to the additional information. For example, the second client 120 is a mobile terminal such as a "smart phone." The second client 120 is a medium that receives detailed information related to additional information. The second client 120 is paired with the first client 110. According to various embodiments, the second client 120 transmits a user input to the first client 110.

The registration server 130 includes a controller, a communication unit, and a fingerprint DB. The communication unit performs data communication with an external device through a network (for example, a mobile communication network (for example, LTE), or wireless or wired LAN). Hereinafter, an operation described as being performed by the registration server 130 is construed as being performed by the controller. The registration server 130 receives a request for registering broadcasting contents from the external device through the communication unit and sets a content ID of the broadcasting contents that have been requested to be registered. The registration of the broadcasting contents is requested by an advertiser as a user who desires to provide the broadcasting contents to the first client 110 in consideration that the broadcasting contents correspond to advertisements. The registration server 130 extracts a fingerprint from the broadcasting contents and set identification information (for example, offset) for identifying the extracted fingerprint. According to some embodiments, the registration request includes the content ID, the fingerprint, and the offset instead of the broadcasting contents. The registration server 130 registers the content ID, the fingerprint, and the offset in the fingerprint DB. The registration server 130 transmits the fingerprint DB to the first client 110.

Further, the registration server 130 receives a request for modifying the fingerprint from an external device (for example, an advertiser terminal) through the communication unit. The modification request includes the content ID, the fingerprint, and the offset. The registration server 130 search for a content ID that matches the content ID, which has been requested to be modified in the fingerprint DB and replace a fingerprint corresponding to the received offset among the fingerprints of the found content IDs with the fingerprint that has been requested to be modified. Further, the registration server 130 receives a request for deleting the fingerprint (including the content ID) from the external device. The registration server 130 searches for a content ID that matches the content ID, which has been requested to be deleted, in the fingerprint DB and deletes the found content ID and a fingerprint corresponding to the content ID in the fingerprint DB.

The registration server 130 receives a request for identifying an update of the fingerprint from the first client 110. The registration server 130 searches for a fingerprint list, which has been newly registered, modified, or deleted, in the fingerprint DB in response to the identification of the update and transmit the found fingerprint list to the first client 110. According to some embodiments, when the fingerprint DB is updated, the registration server 130 transmits the updated fingerprint list to the first client 110 even though there is no update request.

According to various embodiments, when the broadcasting contents are requested to be registered, the registration server 130 also registers additional information and detailed information related to the broadcasting contents. The registration server 130 stores the additional information and the detailed information together in the fingerprint DB or stores them in separate DBs. The registration server 130 registers different pieces of additional information according to each offset (or each time). Further, the registration server 130 registers different pieces of additional information according to each targeting condition. The information provision server 140 includes a controller, a communication unit, and an additional information DB. Hereinafter, an operation described as being performed by the information provision server 140 is construed as being performed by the controller. The information provision server 140 receives additional information from an external server (for example, the registration server 130) through the communication unit and stores the received additional information in the additional information DB. The additional information DB includes additional information corresponding to an ID and an offset of the broadcasting contents. Alternatively, the additional information DB includes additional information according to each time (or each offset) in accordance with the content ID. With respect to one content ID, the additional information according to each time (or each offset) includes additional information A corresponding to 3 seconds (offset "101"), additional information B corresponding to d seconds (offset "201"), or additional information C corresponding to 10 seconds (offset "301").

The information provision server 140 receives a request for additional information from the first client 110. The request for the additional information includes a content ID and an offset. Alternatively, the request for the additional information includes information in which a content ID and an offset are combined. The information provision server 140 searches for a content ID, which matches the requested content ID and offset in the additional information DB and transmit additional information corresponding to the found content ID and offsets to the first client 110. According to various embodiments, when the additional information is requested, feature information (for example, indicating that a viewer is a "woman in her thirties") on the corresponding client is further included. Accordingly, the information provision server 140 selects "additional information having a targeting condition that meets feature information" from the acquired additional information and transmits the selected additional information to the first client 110. For example, at least one piece of location information, time information, language information, device information, and information indicating whether subscription to a broadcasting channel is made is set as the targeting condition of the additional information.

The information provision server 140 searches for a content ID, which matches the content ID of the received additional information, in the additional information DB and adds the received additional information in a list of found content ID. When there is no content ID, which matches the received content ID, in the additional information DB, the information provision server 140 newly registers the content ID in the additional information DB and adds the received additional information to a list of the newly registered content ID. According to some embodiments, the information provision server 140 further receives the targeting condition of the additional information as well as the additional information. The information provision server 140 registers the targeting condition in the additional information DB as an option of the added additional information.

The information provision server 140 receives a request for modifying the additional information from an external device through the communication unit. The modification request includes a content ID and additional information. The information provision server 140 searches for a content ID, which matches the received content ID, in the additional information DB and replace the existing additional information with the received additional information in a list of found content ID. The modification request further includes the targeting condition of the additional information, and the information provision server 140 registers the targeting condition in the additional information DB as an option of the replaced additional information.

The information provision server 140 receives a request for deleting the additional information (including the content ID) from an external device through the communication unit. The information provision server 140 searches for a content ID, which matches the received content ID, in the additional information DB and delete the found content ID and additional information corresponding to the content ID in the additional information DB.

The information provision server 140 receives a request for updating the additional information from the first client 110 through the communication unit. The information provision server 140 searches for a newly registered, modified, or deleted additional information list in the additional information DB and transmits the found additional information list to the first client 110. According to certain embodiments, when the additional information DB is updated, the information provision server 140 transmits the updated additional information list to the first client 110 even though there is no update request.

The executive analysis server 150 includes a controller, a communication unit, and a log information DB. The executive analysis server 150 receives log information from the first client 110 and registers the received log information in the log information DB. The log information includes information indicating viewing histories of the broadcasting contents, information indicating whether the user reacts to the additional information, and the number of exposures of the additional information. Alternatively, the log information includes information indicating a pattern of the use of the first client 110 by the user. For example, the pattern information includes information related to a favorite service among services (for example, web surfing, TV replay, movie, and animation) provided by the first client 110, information indicating a type of a favorite application, and information indicating the time when the user frequently uses the first client 110. The log information includes at least one of the content ID, the fingerprint, and the offset.

Although it has been described that three servers (for example, the registration server, the information provision server, and the executive analysis server) individually perform operations, it is apparent that the three servers are combined into one to perform all the operations. When the three servers are combined into one to constitute a system, the system includes a content management unit (for example, registration server), an information provision unit (for example, information provision server), an analysis unit (for example, executive analysis server), a communication unit, and a database (including all of the fingerprint DB, the additional information DB, and the log information DB).

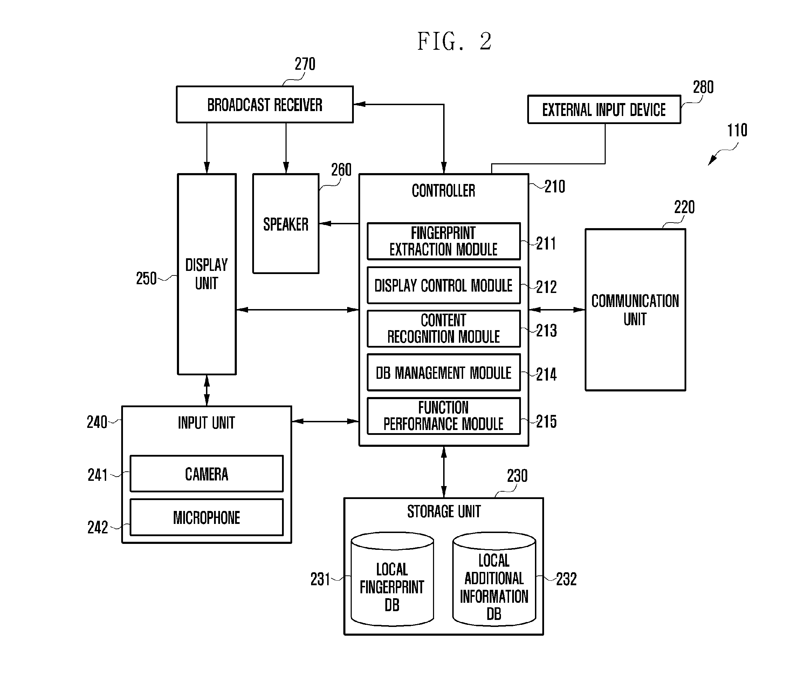

FIG. 2 is a block diagram illustrating a configuration of the first client according to various embodiments of the present disclosure.

Referring to FIG. 2, the first client 110 includes a display unit 250, an input unit 240, a storage unit 230, a communication unit 220, a broadcast receiver 270, a speaker 260, and a controller 210. The first client 110 is an electronic device (for example, a smart TV) having a function of receiving and displaying broadcasting contents.

The display unit 250 displays various pieces of data under a control of the controller 210. The display unit 250 includes a display panel or a hologram. For example, the display panel is a Liquid Crystal Display (LCD), an Active Matrix Organic Light Emitting Diode (AM-OLED), or the like. The display panel is implemented to be, for example, flexible, transparent, or wearable. The hologram shows a three-dimensional image in the air using interference of light.

According to some embodiments, the display unit 250 is a separate device that is separated from the first client 110. For example, the display unit 250 and the first client 110 correspond to a TV and a set-top box, respectively, and they are connected to each other through an interface (for example, a High Definition Multimedia Interface (HDMI).

The input unit 240 receives a user input and transfer the user input to the controller 210. For example, the input unit 240 includes a camera 241 and a microphone 242. The camera 241 photographs a still image or a dynamic image as a user input and transfer the photographed image to the controller 210. According to various embodiments, the camera 241 includes one or more image sensors, a lens, an Image Signal Processor (ISP), and a flash (for example, LED or xenon lamp). The microphone 242 converts a sound wave into an audio signal and transfer the audio signal to the controller 210. Meanwhile, the input unit 240 further includes a keypad or a touch panel installed in the screen.

The storage unit 230 stores data generated by the first client 110 (for example, user contents generated through the microphone 242 or the camera 241) or data received from an external device through the communication unit 220 (for example, information related to broadcasting contents). According to various embodiments, the storage unit 230 includes a local fingerprint DB 231. The local fingerprint DB 231 includes content IDs according to each DB broadcasting content and one or more fingerprints corresponding to the content IDs. The fingerprint exists in the local fingerprint DB 231 according to each frame. Further, in one dynamic image, fingerprints are distinguished by identification information (for example, offset).

The storage unit 230 further includes a local additional information DB 232. The local additional information DB 232 includes one or more pieces of additional information according to each offset in accordance with the content ID. For example, with respect to a content ID "10," the local additional information DB 232 includes additional information A having an offset "100," additional information B having an offset "200," and additional information C having an offset "300." The additional information A to C is selectively displayed based on a time point when the content ID and offset, which match the broadcasting contents, are recognized from a time point when the broadcasting contents are displayed.

The local additional information DB 232 further includes a targeting condition according to each piece of additional information. One of a plurality of pieces of additional information is selected based on the targeting condition, and both the corresponding broadcasting contents and the additional information are displayed at the same time or only the additional information is displayed. Further, based on the targeting condition, a plurality of pieces of additional information is selected. In certain embodiments, the selected pieces of additional information are sequentially or simultaneously displayed.

According to some embodiments, the DBs 231 and 232 are integrated into one DB. For example, the integrated DB includes a content ID, one or more fingerprints, and one or more pieces of additional information according to each broadcasting content.

The storage unit 230 additionally stores various pieces of information (for example, a phone number, age, hobby, address, and job) related to the user of the first client 110. The user information is used for selecting additional information. Further, the user information is used for providing detailed information on the additional information to an external device (for example, the second client 120).

The storage unit 230 stores a program that supports fingerprint extraction, content recognition, database management, and an additional information-related function under a control of the controller 210.

The communication unit 220 performs data communication with an external device (for example, the second client 120 or the servers 130 to 150) through a network (for example, a mobile communication network (for example, LTE), or a wireless or wired LAN) under a control of the controller 210. Further, the communication unit 220 directly performs data communication with the external device through a designated wireless frequency channel, for example, BLUETOOTH or Wi-Fi direct without a relay of the network (for example, without a relay of an Access Point (AP)).

The broadcast receiver 270 receives broadcasting contents, classifies the broadcasting contents into an image and an audio signal, and transfers the image and the audio signal to the display unit 250 and the speaker 260, respectively under a control of the controller 210. The broadcast receiver 270 includes a module for receiving a terrestrial broadcast, a satellite broadcast, a cable broadcast, or an Internet Protocol Television (IPTV) broadcast.

The speaker 260 converts the audio signal received from the controller 210 or the broadcast receiver 270 into a sound wave and output the sound wave.

The controller 210 controls the general operation of the first client 110 and a signal flow between the interval components, and process data. The controller 210 includes a fingerprint extraction module 211, a display control module 212, and content recognition module 213.

The fingerprint extraction module 211 extracts a fingerprint from the broadcasting contents. The broadcasting contents are waiting to be displayed or are being displayed through the display unit 250. The extraction process includes, for example, a process of converting at least one frame into a digit string and a process of designating an offset to the digit string (fingerprint) based on an order of the corresponding frame.

The content recognition module 213 identifies a fingerprint, which matches the extracted fingerprint, in the local fingerprint DB 231 and acquires a content ID corresponding to the identified fingerprint from the local fingerprint DB 231.

The display control module 212 transmits an additional information request message (including the acquired content ID and offset) to the information provision server 140 through the communication unit 220. The display control module 212 receives a response message (including additional information) from the information provision server 140 through the communication unit 220 and controls the display unit 250 to simultaneously display the additional information and the corresponding broadcasting contents.

According to various embodiments, the display control module 212 determines whether the broadcasting contents are recognized within a predetermined first threshold time from a time point when the recognition operation is initiated. The recognition operation refers to an operation of extracting the fingerprint from the broadcasting contents and recognizing the content ID and the offset corresponding to the fingerprint. When the content ID and the offset are recognized within the first threshold time, the display control module 212 controls the display unit 250 to display additional information (for example, additional information A) which matches the first threshold time (for example, 3 seconds). When the broadcasting contents are not recognized within the first threshold time, the display control module 212 determines whether the broadcasting contents are recognized within a predetermined second threshold time from the time point when the recognition operation is initiated. When the content ID and the offset are recognized within the second threshold time, the display control module 212 controls the display unit 250 to display additional information (for example, additional information B) that matches the second threshold time (for example, 5 seconds).

According to various embodiments, the additional information request message further includes feature information on the first client 110. For example, the feature information further includes device information on the first client 110, location information on the first client 110, and connection state information indicating whether the first client 110 is connected to a user device (for example, the second client 120). The device information includes information indicating a type (for example, a smart phone, or a TV), manufacturing year, and information indicating types and capabilities of mounted components (hardware and software). The location information includes at least one piece of latitude and longitude information, geographical address information (for example, 416 Metan 3-dong, Yeongtong-gu, Suwon-si, Gyeonggi-do) and information related to the geographical address. The information related to the geographical address includes at least one piece of information (for example, a building name, a café name, a city hall name, a department store name, or the like) on a building located at (or adjacent to) the geographical address, structure information (for example, a tunnel name, a mountain name, a cell ID of a BS, or the like), an IP address corresponding to the geographical address, and a phone number corresponding to the geographical address. Further, various pieces of information (for example, speed information related to a means of transportation and vehicle identification information) irrelevant to the geographical address are included in the location information. The display control module 212 receives a response message (including additional information) from the information provision server 140 through the communication unit 220 and controls the display unit 250 to simultaneously display the additional information and the corresponding broadcasting contents or to display only the additional information.

The display control module 212 acquires additional information corresponding to the acquired content ID from the local additional information DB. The display control module 212 acquires the additional information corresponding to the acquired content ID from the local additional information DB232 and controls the display unit 250 to display the acquired additional information. For example, the additional information includes two types such as an image and a video. For example, the image is displayed on the display unit 250 without any sound, and the video is displayed on the display unit 250 with a sound through the speaker 260 at the same time. When the additional information is the image, the display control module 212 makes a control to output the image together with broadcasting contents in a banner form. Alternatively, when the additional information is the video, the display control module 212 makes a control to output the video instead of the broadcasting contents, and vice versa.

The controller 210 further includes a DB management module 214. The DB management module 214 periodically transmits a fingerprint update request message to an external device (for example, the registration server 130) through the communication unit 220. The DB management module 214 manages the local fingerprint DB 231 by using a response message received from the external device. For example, the response message includes a new broadcast list (information on at least one new broadcasting content and "the content ID and the fingerprint") and, accordingly, the DB management module 214 registers the new broadcast list in the local fingerprint DB 231. Some of the broadcasting contents (for example, some of frames of the dynamic image) is replaced. Accordingly, a fingerprint and an offset corresponding to the replaced part are required to be modified. Then, the response message includes a fingerprint replacement list (a new fingerprint of at least one content ID). Accordingly, the DB management module 214 replaces the corresponding existing fingerprint with a new fingerprint in the local fingerprint DB 231. The response message includes a broadcasting end list and, accordingly, the DB management module 214 searches for a content ID, which matches the content ID included in the broadcasting end list, in the local fingerprint DB 231 and deletes the found content ID and a fingerprint corresponding to the content ID in the local fingerprint DB 231.

The DB management module 214 periodically transmits an additional information update request message to an external device (for example, the additional service server) through the communication unit 220. The DB management module 214 manages the local additional information DB 232 by using a response message received from the external device. For example, the response message includes a new additional information list having at least one piece of new additional information and a content ID and an offset related to the new additional information. Accordingly, the DB management module 214 identifies whether a content ID, which matches the received content ID, exists in the local additional information DB 232. When the content ID exists in the local additional information DB 232, the DB management module 214 registers the received new additional information in the local additional information DB 232 in accordance with the corresponding content ID. When the content ID does not exist in the local additional information DB 232, the DB management module 214 registers the received content ID and offset in the local additional information DB 232 together with the new additional information since the broadcasting contents themselves are new from a viewpoint of the first client 110. With respect to the broadcasting contents, while the new additional information and the content ID are maintained, the additional information is replaced with new one. Then, the response message includes an additional information replacement list (new additional information and an offset with respect to the content ID). Accordingly, the DB management module 214 replaces the corresponding existing additional information with new additional information in the local additional information DB 232. The response message includes an additional information service end list and, accordingly, the DB management module 214 searches for a content ID, which matches the content ID included in the list, in the local additional information DB 232 and delete the found content ID and additional information corresponding to the content ID in the local fingerprint DB 232.

According to some embodiments, the DB management module 214 simultaneously makes the fingerprint update request and the additional information update request. For example, the DB management module 214 periodically transmits the fingerprint and additional information update request messages to the external devices (for example, the registration server 130 and the information provision server 140) through the communication unit 220, respectively.

According to some embodiments, the DB management module 214 receives a push message including update information on at least one of the fingerprint and the additional information from the external device (for example, the registration server 130 or the information provision server 140) through the communication unit 220. The DB management module 214 manages the local fingerprint DB 231 and the local additional DB 232 based on the push message.

The controller 210 further includes a function performance module 215 for performing a function related to additional information in response to a user input for the displayed additional information. The user input is received from the input unit 240. Further, the user input is received from an external input device 280. For example, the function performance module 215 transmits detailed information related to the additional information to another device of the user (for example, the second client 120) through the communication unit 220 in response to the user input. Further, the function performance module 215 transmits information related to another device of the user to the server through the communication unit 220 in response to the user input. The server is the registration server 130 or a separate server for providing detailed information related to broadcasting contents.

The function performance module 215 controls some components (for example, the camera 241 and the microphone 242) to generate user contents in response to the user input and transmit the generated user contents to the server through the communication unit 220. The function performance module 215 collects log information and transmits the collected log information to the executive analysis server 150 through the communication unit 220. The log information includes user's viewing histories of the broadcasting contents and a user reaction to the additional information. Alternatively, the log information includes information indicating a pattern of the use of the first client 110 by the user. The pattern information includes information related to a favorite service among services (for example, web surfing, TV replay, movie, and animation) provided by the first client 110, information indicating a type of a favorite application, and information indicating the time when the user frequently uses the first client 110.

The external input device 280 provides a user input to the controller 210 and is, for example, a TV remote control.

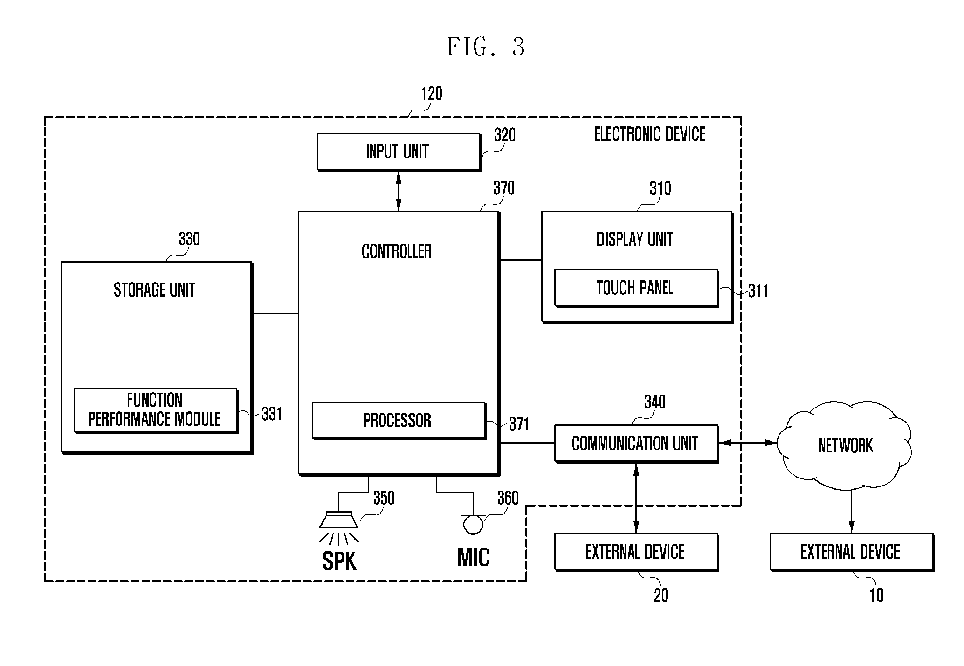

FIG. 3 is a block diagram illustrating a configuration of the second client according to various embodiments of the present disclosure.

Referring to FIG. 3, the second client 120 includes a display unit 310, an input unit 320, a storage unit 330, a communication unit 340, a speaker 350, a microphone 360, and a controller 370. The second client 120 is an electronic device (for example, a smart phone) having a function of receiving and displaying detailed information.

The display unit 310 displays various pieces of information under a control of the controller 370. The display unit 310 includes a display panel or a hologram. The display panel includes a "touch panel 311" that is an input unit for an interaction between the user and the electronic device 120. The display unit 310 is interchangeable with a touch screen.

The touch panel 311 is implemented in an add-on type located on the screen of the display unit 310 or an on-cell type or an in-cell type inserted into the display unit 310. The touch panel 311 detects a user input in at least one of, for example, a capacitive type, resistive type, an infrared type, and an ultrasonic wave type, generates an event corresponding to the user input, and transfers the generated event to the controller 370. The touch panel 311 detects a gesture of a conductive object (for example, a finger or a stylus) that directly contacts the screen or is proximate or hovering within a predetermined range in which the touch panel 311 detects the object. The touch panel 311 generates an event corresponding to the gesture and transfers the generated event to the controller 370.

The input unit 320 includes, for example, a touch key which is different from the touch panel 311 installed in the display unit 310. The touch key recognizes a touch or proximity of the human body and the object. The input unit 320 generates an event in response to a user input and transfers the generated event to the controller 370. The input unit 320 further includes a key (for example, a dome key) in one type different from the touch type. For example, when the user presses the dome key, the dome key is transformed to contact a printed circuit board and, accordingly, a key event is generated on the printed circuit board and transmitted to the controller 370.

The storage unit 330 stores data generated by the electronic device 120 or received from an external device through the communication unit 240 under a control of the controller 370. Further, the storage unit 330 stores a booting program, at least one operating system, and applications. The storage unit 330 includes a main memory and a secondary memory. The main memory is implemented by, for example, a Random Access Memory (RAM). The secondary memory is implemented by a disc, a RAM, a Read Only Memory (ROM), or a flash memory. The main memory stores various programs loaded from the secondary memory, for example, a booting program, an operating system (for example, kernel), middleware, an Application Programming Interface (API), and an application. When power of a battery is supplied to the controller 370, the booting program is first loaded to the main memory. The booting program loads the operating system to the main memory. The operating system loads the application to the main memory. The controller 370 accesses the main memory to decode a command (routine) of the program and execute a function according to a decoding result. The storage unit 330 further includes an external memory. For example, the storage unit 330 includes a Compact Flash (CF), a Secure Digital (SD), a Micro Secure Digital (Micro-SD), a Mini Secure Digital (Mini-SD), an extreme Digital (xD), or a memory stick as the external memory.

The storage unit 330 stores the function performance module 331. The function performance module 331 is configured to allow the electronic device 120 to perform a function related to additional information through an interworking with another device of the user (for example, the first client 110).

The communication unit 340 performs data communication with an external device 10 (for example, the first client 110) through a communication network (for example, LTE or wireless LAN) under a control of the controller 370. The communication unit 340 directly performs the data communication with an external device 20 (for example, the first client 110) through a designated frequency channel without a relay of the network (for example, without a relay of the AP).

The speaker 350 converts the audio signal received from the controller 370 into a sound wave and outputs the sound wave. The microphone 360 converts sound waves transferred from the person or other sound sources into audio signals and output the audio signals to the controller 370.

The controller 370 controls general operations of the electronic device 120 and a signal flow between internal components of the electronic device 120 process data, and controls power supply to the components from the battery. The controller 370 includes a processor 371. The processor 371 includes an Application Processor (AP), a Communication Processor (CP), a Graphic Processing Unit (GPU), and an audio processor. The CP is a component of the communication unit 340.

The processor 371 (for example, the AP) loads a command or data received from a non-volatile memory (for example, a memory used as the secondary memory) or another component connected to the processor 371 to a volatile memory (for example, a memory used as the main memory) and processes the loaded command and data. Further, the processor 371 stores data received from or generated by at least one of other components in the non-volatile memory.

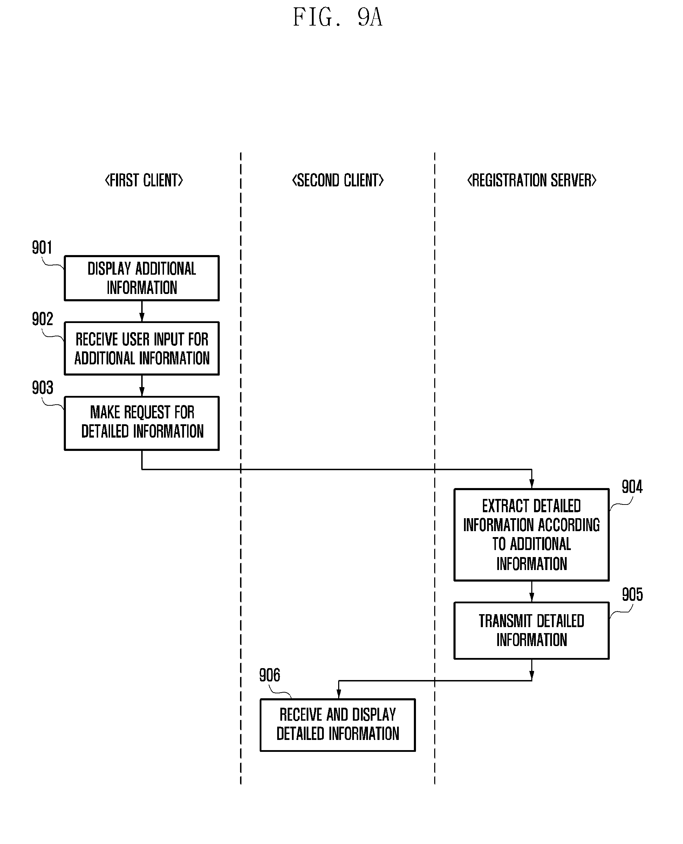

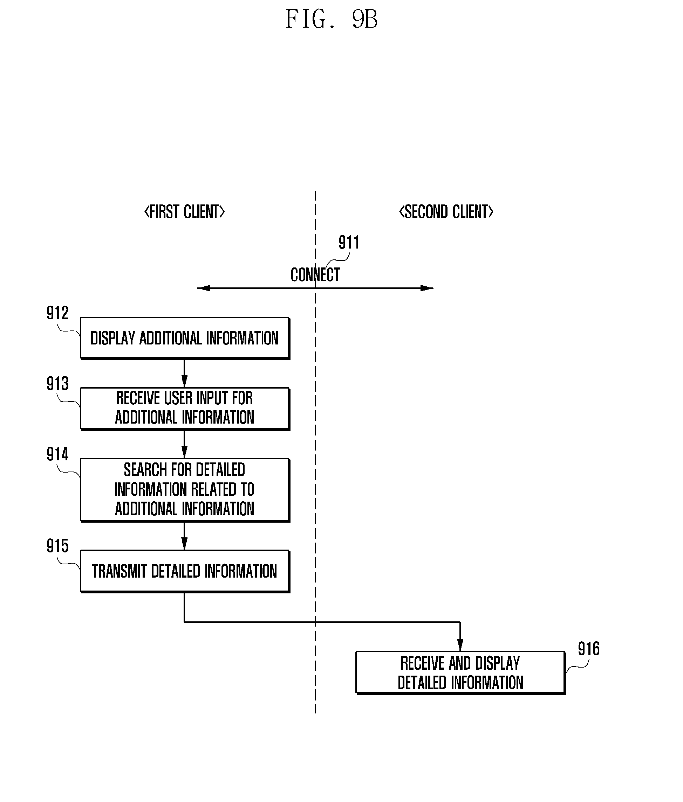

The processor 371 (for example, the AP) implements a method of performing the function related to the additional information by using the function performance module 331. Hereinafter, various embodiments of the method will be described in detail with reference to FIGs. 9A and 9B below.

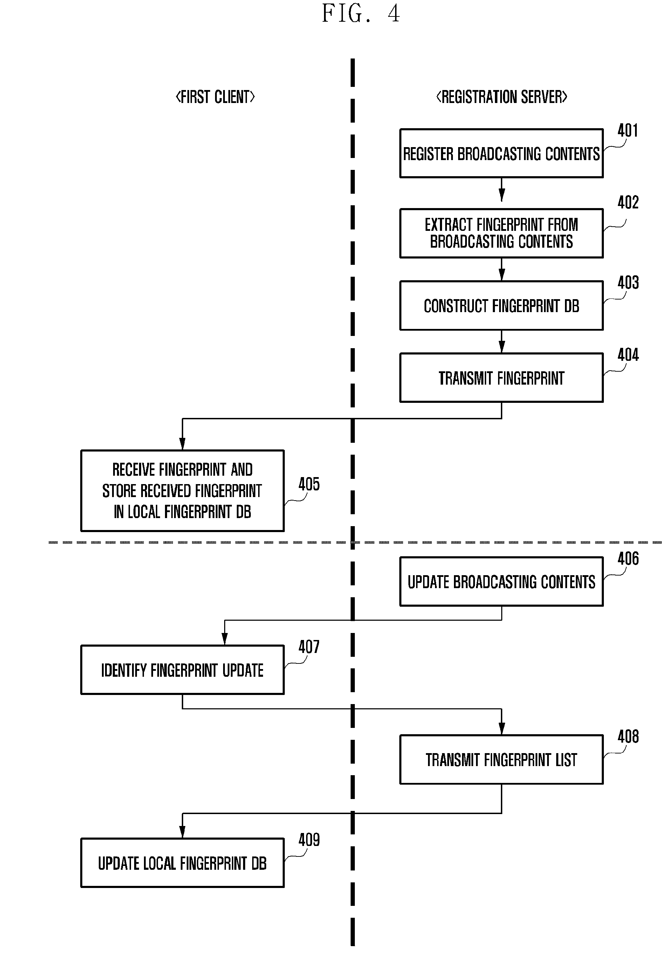

FIG. 4 is a flowchart illustrating a method of constructing the local fingerprint DB according to various embodiments of the present disclosure.

Referring to FIG. 4, in operation 401, the registration server 130 registers broadcasting contents from an external device (for example, an advertiser terminal). When receiving a request for registering the broadcasting contents, the registration server 130 allocates a content ID to the broadcasting contents requested to be registered. The registration server 130 stores new broadcasting contents in the fingerprint DB in accordance with the allocated content ID. When registering the broadcasting contents, the registration server 130 also registers additional information. The additional information is stored in the fingerprint DB or in a separate database.

In operation 402, the registration server 130 extracts a fingerprint from one frame of the registered broadcasting contents.

In operation 403, the registration server 130 constructs the fingerprint DB including the broadcasting contents and the extracted fingerprint in accordance with the allocated content ID. The registration server 130 selects some of all frames of the broadcasting contents and extracts fingerprints with respect to the selected frames. When a plurality of fingerprints is selected from one broadcasting content, the registration server 130 sets offsets with respect to the fingerprints.

In operation 404, the registration server 130 transmits the extracted fingerprints to the first client 110. Operation 404 is an operation for transmitting fingerprints and offsets corresponding to the content ID to the first client 110.

In operation 405, the first client 110 receives fingerprints and stores the received fingerprints in the local fingerprint DB.

The broadcasting contents re newly registered (added), modified, and deleted. In operation 406, the registration server 130 updates the broadcasting contents. The registration server 130 updates the newly registered, modified, or deleted fingerprint in the fingerprint DB. In operation 407, the first client 110 identifies whether the fingerprint is updated. In order to identify the update, the first client 110 transmits an update request message to the registration server 130.

In operation 408, the registration server 130 transmits an updated fingerprint list to the first client 110 in response to the update request message. According to certain embodiments, when the fingerprint DB is updated, the registration server 130 transmits the updated fingerprint list to the first client 110 even though there is no update request.

In operation 409, the first client 110 receives the fingerprint list and stores the received fingerprint list in the local fingerprint DB.

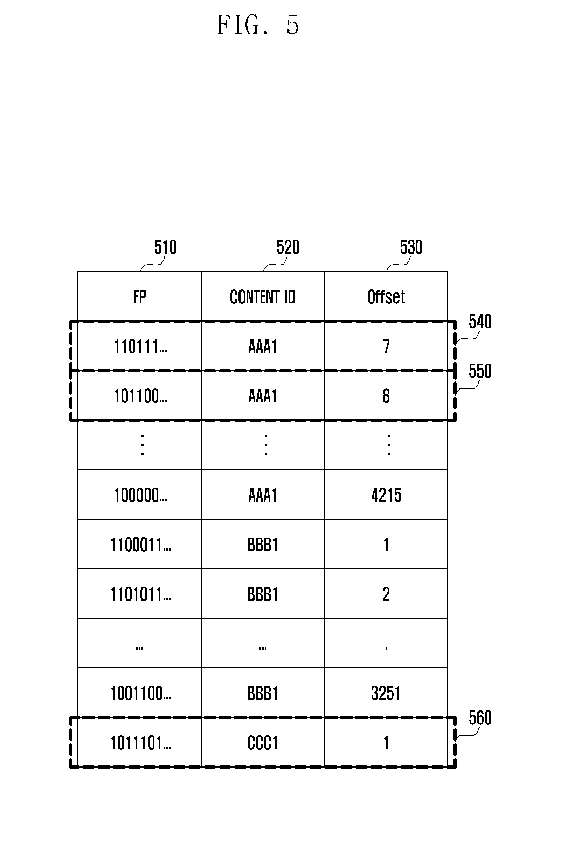

FIG. 5 illustrates a structure of the local fingerprint DB according to various embodiments of the present disclosure.

Referring to FIG. 5, the local fingerprint DB includes a fingerprint (FP), a content ID, and an offset. A fingerprint indicated by reference numeral 510 is information for identifying broadcasting contents. The fingerprint 510 is expressed by a digit string such as 0 or 1 to perform easy identification. A content ID indicated by reference numeral 520 is an identifier for identifying broadcasting contents. An offset indicated by reference numeral 530 indicates an order of the frame for the fingerprint with respect to one content ID. Reference numeral 540 indicates the fingerprint "110111..." and the content ID "AAA1" and indicates that a seventh frame within the broadcasting contents is identified. Reference numeral 550 indicates the fingerprint "101100..." and the content ID "AAA1" and indicates that an eighth frame within the broadcasting contents is identified. Reference numeral 560 indicates the fingerprint "1011101..." and the content ID "CCC1" and indicates that a first frame within the broadcasting contents is identified.

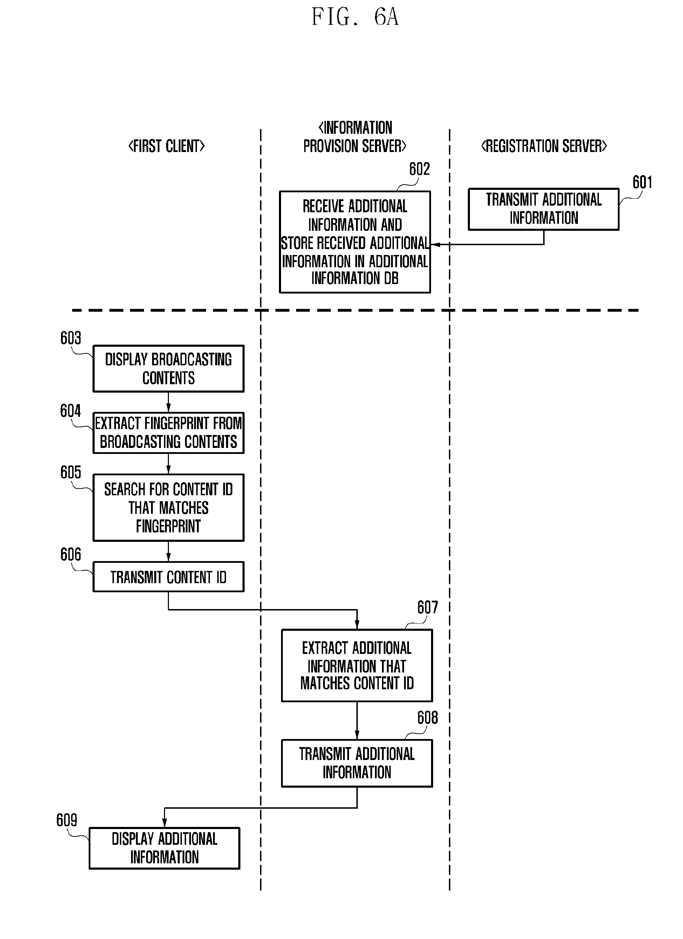

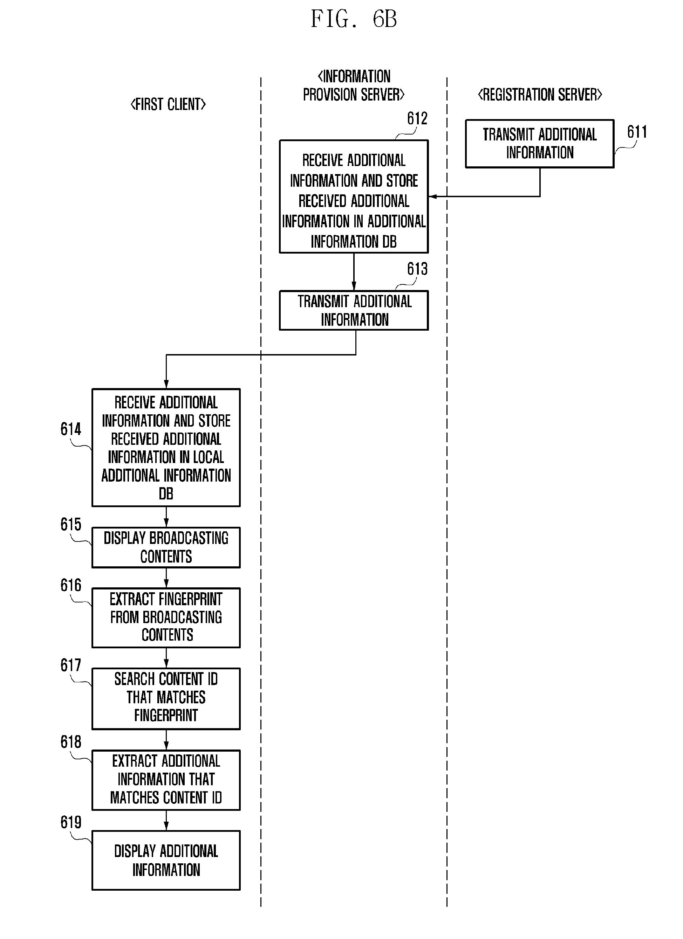

FIGs. 6A and 6B are flowcharts illustrating a method of providing additional information according to various embodiments of the present disclosure.

Referring to FIG. 6A, in operation 601, the registration server 130 transmits additional information to the information provision server 140. When registering broadcasting contents, the registration server 130 also registers additional information. The additional information is stored in a fingerprint DB or in a separate database. The registration server 130 transmits additional information according to each offset and a targeting condition of the additional information to the information provision server 140 in accordance with the content ID.

In operation 602, the information provision server 140 receives the additional information and stores the received additional information in an additional information DB. The additional information DB includes additional information corresponding to an ID and an offset of the broadcasting contents. Alternatively, the additional information DB includes additional information according to each time (or each offset) in accordance with the content ID. The additional information according to each time (or each offset) refers to information including additional information A corresponding to 3 seconds, additional information B corresponding to 5 seconds, and additional information C corresponding to 10 seconds with respect to one content ID.

According to various embodiments, the information provision server 140 or not transmits the additional information to the first client 110. When the additional information is not transmitted, the following operations are executed, and operations in a case where the additional information is transmitted will be described below with reference to FIG. 6B.

In operation 603, the first client 110 displays the broadcasting contents.

In operation 604, the first client 110 extracts a fingerprint from the displayed broadcasting contents. An extraction process refers to a process of converting at least one frame of the broadcasting contents into a digit string. The converted digit string corresponds to the fingerprint.

In operation 605, the first client 110 searches for a content ID and an offset, which match the extracted fingerprint, in a local fingerprint DB. The first client 110 searches for a fingerprint, which matches the fingerprint of the frame converted into the digit string, in the local fingerprint DB and searches for the content ID and the offset corresponding to the found fingerprint.

In operation 606, the first client 110 transmits an additional information request message including the found content ID and offsets to the information provision server 140. According to various embodiments, the additional information request message further includes feature information on the first client 110. For example, the feature information further includes device information on the first client 110, location information on the first client 110, and connection state information indicating whether the first client 110 is connected to a user device (for example, the second client 120).

In operation 607, the information provision server 140 receives the content ID and the offset and extracts additional information, which matches the received content ID and offset, from the additional information DB. The information provision server 140 extracts additional information suitable for the feature information from pieces of additional information that match the content ID and the offset.

In operation 608, the information provision server 140 transmits the extracted additional information to the first client 110.

In operation 609, the first client 110 receives the additional information and display the received additional information. The first client 110 displays both the broadcasting contents and the additional information at the same time or displays only the additional information.

According to various embodiments, the first client 110 displays different pieces of additional information according to whether the broadcasting contents are recognized within a predetermined first threshold time from a time point when a recognition operation is initiated. For example, the first client 110 extracts a fingerprint from the broadcasting contents within the first threshold time and, when a content ID and an offset, which match the extracted fingerprint, are found in the database (for example, the local fingerprint DB 231), determine that the broadcasting contents are recognized. 2-1) when the fingerprint is not extracted from the broadcasting contents within the first threshold time and 2-2) when the fingerprint is extracted by the content ID and the offset, which match the extracted fingerprint, are not found in the database, the first client 110 determines that the broadcasting contents are not recognized. Meanwhile, the time point when the recognition operation is initiated is a time point when any frame (for example, a first frame) of the broadcasting contents is transferred to the display unit 250 (a time point when the frame is stored in an internal memory of the display unit 250) or a time point when the display unit 250 displays any frame (for example, the first frame) (for example, a time point when a driver of the display unit 250 transfers the first frame to a display panel of the display unit 250).

When the broadcasting contents are recognized within the first threshold time (for example, 3 seconds), the first client 110 acquires and displays additional information A (for example, participation type additional information) related to the content ID and the offset. For example, the first client 110 searches for an ID, which matches the found content ID, in the database (for example, the local additional information DB 232), acquires additional information A corresponding to the found ID from the database, and displays the acquired additional information A. In another example, the first client 110 transmits an additional information A request including the found content ID and offset to the server (for example, the information provision server 140), receives the additional information A from the server in response to the request, and displays the received additional information A.

When the broadcasting contents are not recognized within the first threshold time, the first client 110 determines whether the broadcasting contents are recognized within a predetermined second threshold time from a time point when a recognition operation is initiated (or a time point when the first threshold time expires). For example, when the content ID and the offset related to the broadcasting contents are found within the second threshold time, it is determined that the broadcasting contents are recognized. In contrast, in a case of 2-1) or 2-2) within the second threshold time, it is determined that the broadcasting contents are not recognized.

When the broadcasting contents are recognized within the second threshold time (for example, 5 seconds), the first client 110 acquires and displays additional information B (for example, non-participation type additional information) related to the content ID and the offset. For example, the first client 110 searches for an ID, which matches the found content ID, in the database (for example, the local additional information DB 232), acquires additional information B corresponding to the found ID from the database, and displays the acquired additional information B. In another example, the first client 110 transmits an additional information B request including the found content ID and offsets to the server (for example, the information provision server 140), receives the additional information B from the server in response to the request, and displays the received additional information B.

When the broadcasting contents are not recognized within the second threshold time, the first client 110 determines that the recognition is not possible. Even though the broadcasting contents are recognized later, the first client 110 not displays the corresponding additional information. Alternatively, when a third threshold time is further configured, the first client 110 displays additional information C corresponding to the third threshold time (for example, 10 seconds).

Meanwhile, the first threshold time is set in consideration of a time that allows the user to sufficiently react to the additional information (that is, time that allows the user to grasp the content and respond (participate). For example, when a reproduction time of the broadcasting contents corresponds to 15 seconds, the first threshold time is set as 5 seconds. The second threshold time is set in consideration of a time that allows the user to recognize the additional information (in other words, time that allows the user to grasp the content). For example, when a reproduction time of the broadcasting contents corresponds to 15 seconds, the second threshold time is set as 10 seconds (that is, 5 seconds before the end).

The additional information is a video. Accordingly, the first threshold time is set in consideration of a reproduction time of the additional information. For example, it is assumed that the reproduction of the additional information should end when or before the reproduction of the broadcasting contents ends. When the reproduction time of the broadcasting contents is 15 seconds and the broadcasting contents are recognized at a point of 5 seconds, additional information corresponding to the remaining 10 seconds (for example, additional information having the reproduction time of 10 seconds) is acquired and reproduced. When the broadcasting contents are recognized at a point of 10 seconds, additional information corresponding to the remaining 5 seconds (for example, additional information having the reproduction time of 5 seconds) is acquired and reproduced. More specifically, a method of displaying additional information according to the embodiment includes a process of, by the corresponding client, extracting a fingerprint from broadcasting contents, a process of searching for a content ID corresponding to the extracted fingerprint in a DB, and a process of acquiring additional information corresponding to the content ID and information indicating a recognition time (for example, a location value (for example, an offset) of the extracted fingerprint) in the DB. In another example, a method of displaying additional information according to the embodiment includes a process of, by the corresponding client, extracting a fingerprint from broadcasting contents, a process of searching for a content ID corresponding to the extracted fingerprint in a DB, a process of transmitting an additional information request including the content ID and information indicating a recognition time to a server; and a process of receiving the additional information from the server and displaying the received additional information.

Referring to FIG. 6B, in operation 611, the registration server 130 transmits additional information to the information provision server 140. In operation 612, the information provision server 140 receives the additional information and stores the received additional information in an additional information DB.

In operation 613, the information provision server 140 transmits the additional information stored in the additional information DB to the first client 110. The information provision server 140 periodically (for example, one hour, one day, one week, or 15 days) transmits the additional information to the first client 110. Based on feature information on the first client 110 to which the additional information is transmitted, the information provision server 140 selects the additional information to be transmitted. For example, when the feature information on the first client 110 corresponds to "a man in his twenties" and "Seoul," the information provision server 140 transmits only additional information corresponding to feature information among a plurality of pieces of additional information corresponding to the content ID to the first client 110.

In operation 614, the first client 110 receives the additional information and stores the received additional information in the local additional information DB.

According to various embodiments, the first client 110 periodically identifies an update of the additional information. To this end, the first client 110 transmits an additional information update request message to the information provision server 140. When the information provision server 140 receives the update request message, the information provision server 140 identifies whether the additional information is updated and transmits the updated additional information to the first client 110. Alternatively, when the update is periodically identified without any update request and the additional information DB is updated, the information provision server 140 transmits the updated additional information list to the first client 110.

In operation 615, the first client 110 displays the broadcasting contents.

In operation 616, the first client 110 extracts a fingerprint from the displayed broadcasting contents.

In operation 617, the first client 110 searches for a content ID and an offset, which match the extracted fingerprint, in the local fingerprint DB.

In operation 618, the first client 110 extracts additional information, which matches the found content ID and offset, from the local additional information DB.

In operation 619, the first client 110 displays the extracted additional information. The first client 110 displays both the broadcasting contents and the additional information at the same time or display only the additional information.

According to various embodiments, additional information should be found and displayed within a short time due to the characteristics of broadcasting contents. However, when the additional information is not found within a predetermined time, the first client 110 displays the corresponding additional information based on an additional information displayable time. That is, as described above, the first client 110 displays different pieces of additional information according to whether the broadcasting contents are recognized within a predetermined first threshold time or second threshold time from a time point when a recognition operation is initiated. For example, when the additional information is displayed only for 3 seconds, the first client 110 displays additional information corresponding to 3 seconds among the extracted additional information.

According to various embodiments, the additional information is set together with a targeting condition corresponding to the content ID. For example, the targeting condition is one piece of location information, time information, language information, device information, and information indicating whether subscription to a broadcasting channel is made.

According to the method described with reference to FIGs. 4 to 6B, various implementations in FIGs. 7A to 7C are made.

FIGs. 7A to 7C illustrate examples of additional information according to various embodiments of the present disclosure.

Referring to FIG. 7A, the first client (for example, a smart TV) simultaneously displays broadcasting contents 710 and additional information 720a. With respect to one broadcasting content 710, the number of pieces of additional information is one or more as indicated by reference numeral 720. Reference numeral 720a indicates additional information for women in their teens to twenties. Reference number 720b indicates additional information for fathers with children. Reference number 720c indicates additional information for mothers with children.

The additional information is provided in a banner form as indicated by reference numeral 720a together with the broadcasting contents 710, but only the additional information is provided without provision of the broadcasting contents.

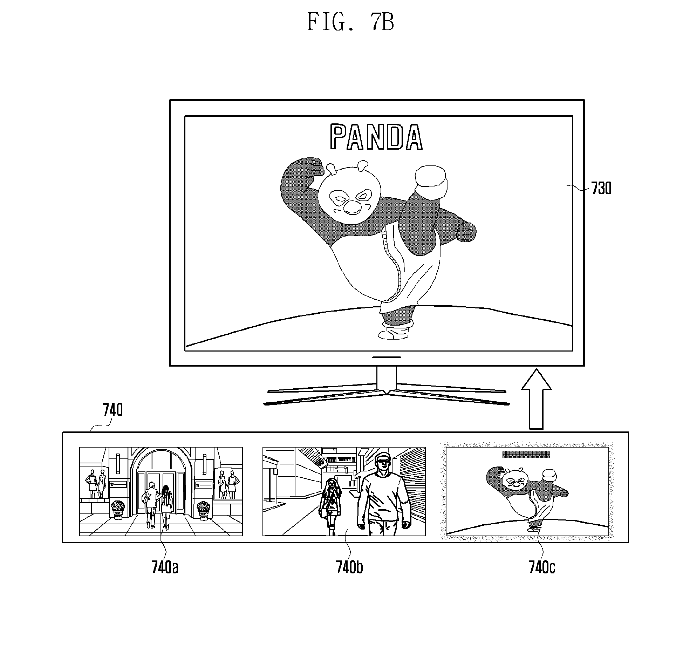

Referring to FIG. 7B, the first client displays additional information related to the broadcasting contents on an entire screen as indicated by reference numeral 730. The additional information 730 is related to the broadcasting contents and overlays the entirety of the broadcasting contents, so that the broadcasting contents are not displayed. The number of pieces of additional information is one or more as indicated by reference numeral 740. Reference numeral 740a indicates additional information for user in his/her teens to twenties. Reference numeral 740b indicates additional information for user in their thirties to forties. Reference numeral 740c indicates additional information for user over 50. For example, when the broadcasting contents are related to a "movie", reference numeral 740a includes a first version of the movie, reference numeral 740b includes a second version of the movie, and reference numeral 740c includes a third version of the movie. Accordingly, it is easier to arouse a viewer's interest by displaying additional information specified for the viewer's age.

According to various embodiments, the first client displays additional information for a time determined or selected to display the additional information based on a broadcasting content display time. For example, when 30-second broadcasting contents are displayed, the first client displays the broadcasting contents only for 5 seconds and displays the additional information for the remaining 25 seconds.

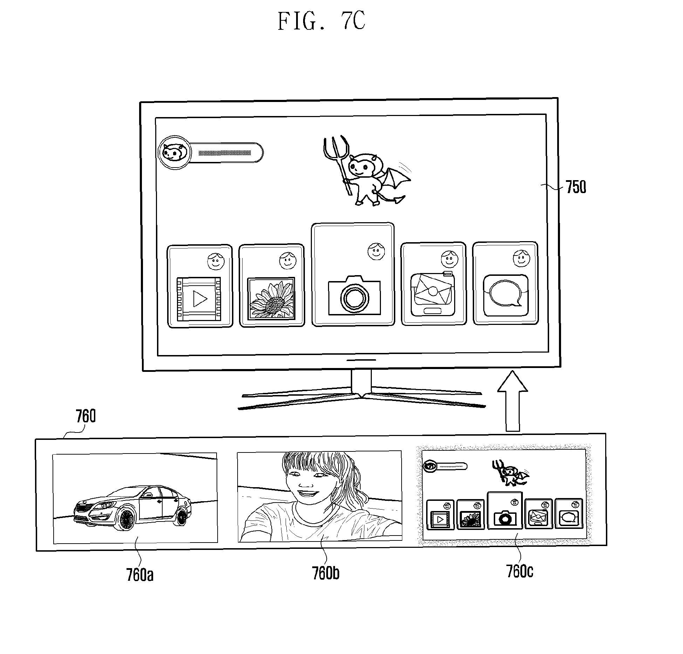

Referring to FIG. 7C, the first client displays additional information irrelevant to the broadcasting contents on an entire screen as indicated by reference numeral 750. The additional information 750 is not related to the broadcasting contents and overlays the entirety of the broadcasting contents, so that the broadcasting contents are not displayed. That is, the original broadcasting contents are related to a "diet drink" but the additional information 750 is related to a "hangover relieving drink," which is entirely different from the original broadcasting contents. The number of pieces of additional information is one or more as indicated by reference numeral 760. Reference numeral 760a is additional information for a female user. Reference number 760b indicates additional information for a male user. Reference number 760c indicates additional information for a child.

According to various embodiments, the first client displays additional information for a time determined or selected to display the additional information based on a broadcasting content display time. Alternatively, the first client displays additional information instead of the original broadcasting contents based on a schedule of the broadcasting contents. That is, the original broadcasting contents are not initially displayed and only the additional information is displayed.

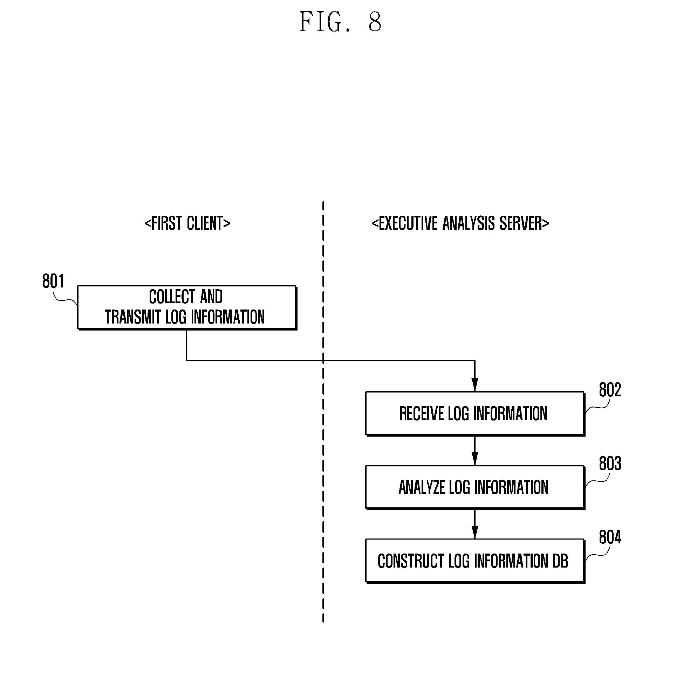

FIG. 8 is a flowchart illustrating a method of collecting log information according to various embodiments of the present disclosure.

Referring to FIG. 8, in operation 801, the client 110 collects log information and transmits the collected log information to the executive analysis server 150. The first client 110 collects, as the log information, pattern information, viewing history information, user reaction information, and the number of exposures of additional information.

In operation 802, the executive analysis server 150 receives the log information from the first client 110. The executive analysis server 150 collects the log information from another client (for example, another smart TV) other than the first client 110.

In operation 803, the executive analysis server 150 analyzes the collected log information. The executive analysis server 150 directly analyzes the log information, or transmits the collected log information to another analysis server (for example, a big data server) and receives an analysis result. The executive analysis server 150 analyzes a meaning of the log information (for example, grasp a viewer's life style), sets the analysis result as feature information on the client, and stores the feature information in a log information DB.

FIGs. 9A and 9B are flowcharts illustrating a method of providing detailed information to the second client according to various embodiments of the present disclosure.

Referring to FIG. 9A, in operation 901, the first client 110 displays additional information. The first client 110 displays both the broadcasting contents and the additional information at the same time or display only the additional information. The first client 110 applies the additional information display method to display different pieces of additional information according to the time when the broadcasting contents are recognized.

In operation 902, the first client 110 receives a user input for the additional information (in other words, a user reaction or an additional information request from the user). The user input is received from an external device (for example, the second client 120 or the external input device 280). Alternatively, the user input is generated in an internal component (for example, the camera 241 or the microphone 242) of the first client.

In operation 903, the first client 110 makes a request for detailed information to the registration server 130 in response to the user input. The request for the detailed information includes at least one of a content ID, an offset, feature information on the first client 110, and device information on the second client 120.

In operation 904, the registration server 130 receives the request and extracts detailed information according to additional information.

In operation 905, the registration server 130 transmits the extracted detailed information to the second client 120.

In operation 906, the second client 120 receives and displays the detailed information. The second client 120 receives a user input for the displayed detailed information and performs a function corresponding to the user input.

According to various embodiments, the first client 110 receives detailed information from the registration server 130 in advance and stores the received detailed information in the memory (for example, the storage unit 230). Such various embodiments will be described with reference to FIG. 9B.

Referring to FIG. 9B, in operation 911, the first client 110 establishes a connection with the second client 120. For example, the first client 110 and the second client 120 establishes the connection therebetween through a medium (for example, an access point) or without the medium. According to various embodiments, a process of establishing the connection includes a process of collecting information on neighboring external devices transmitted (advertised) by the corresponding external devices, by scanning predetermined frequency channel(s), a process of finding neighboring external devices, with which the electronic device itself communicates, based on the collected information, and a process of completing the connection by exchanging communication information with the found external devices (for example, IDs, IP addresses and the like).

In operation 912, the first client 110 displays the additional information. Similarly, the first client 110 applies the additional information display method to display different pieces of additional information according to the time when the broadcasting contents are recognized.

In operation 913, the first client 110 receives a user input for the displayed additional information. The user input is generated by an internal component of the first client or received from an external device.

In operation 914, the first client 110 searches for detailed information related to the additional information from the memory (for example, the storage unit 230) in response to the user input.

In operation 915, the first client 110 transmits the found detailed information to the connected second client 120.

In operation 916, the second client 120 receives and displays the detailed information. The second client 120 receives a user input for the displayed detailed information and performs a function corresponding to the user input.

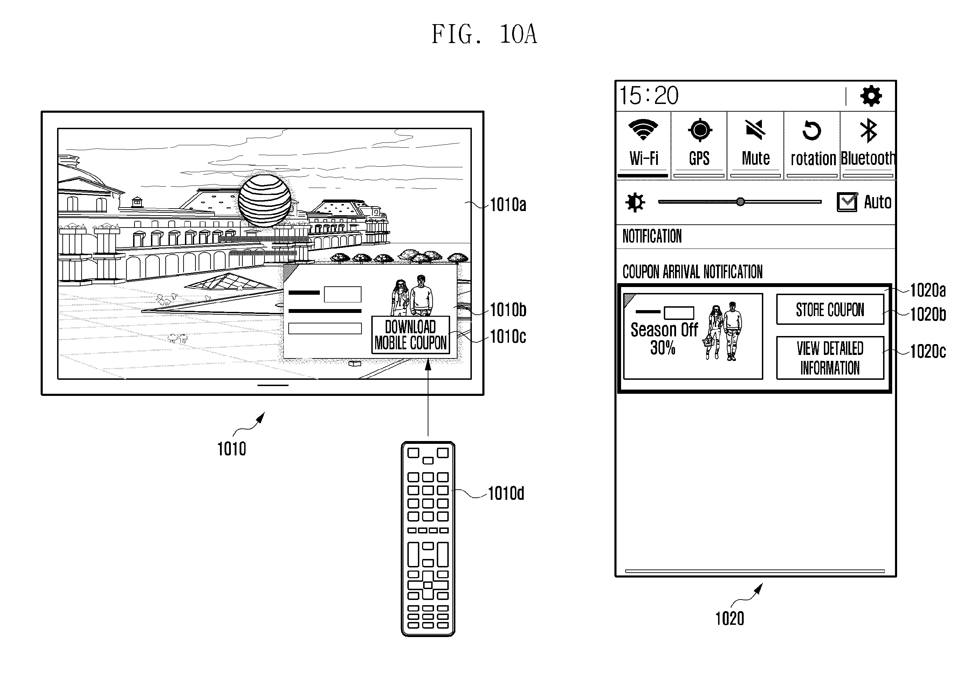

According to the detailed information providing method described with reference to FIGs. 9A and 9B, various implementations in FIGs. 10A to 10F are made.

FIGs. 10A to 10F illustrate examples of detailed information according to various embodiments of the present disclosure.

Referring to FIG. 10A, reference numeral 1010 indicates a first client such as a smart TV and reference numeral 1020 indicates a second client such as a smart phone. The smart TV 1010 displays broadcasting contents 1010a and additional information 1010b together. The user selects "download a mobile coupon" 1010c in the additional information 1010b through an external device 1010d such as remote control. When "download a mobile coupon" is selected, the smart TV 1010 acquires detailed information corresponding to the additional information 1010b. Reference numeral 1020a indicates detailed information. The smart TV 1010 transmits detailed information 1020a to the smart phone 1020. The smart phone 1020 displays the detailed information 1020a. The smart phone 1020 receives a user input of selecting reference numeral 1020b or reference numeral 1020c. The smart phone 1020 performs a function corresponding to the user input.

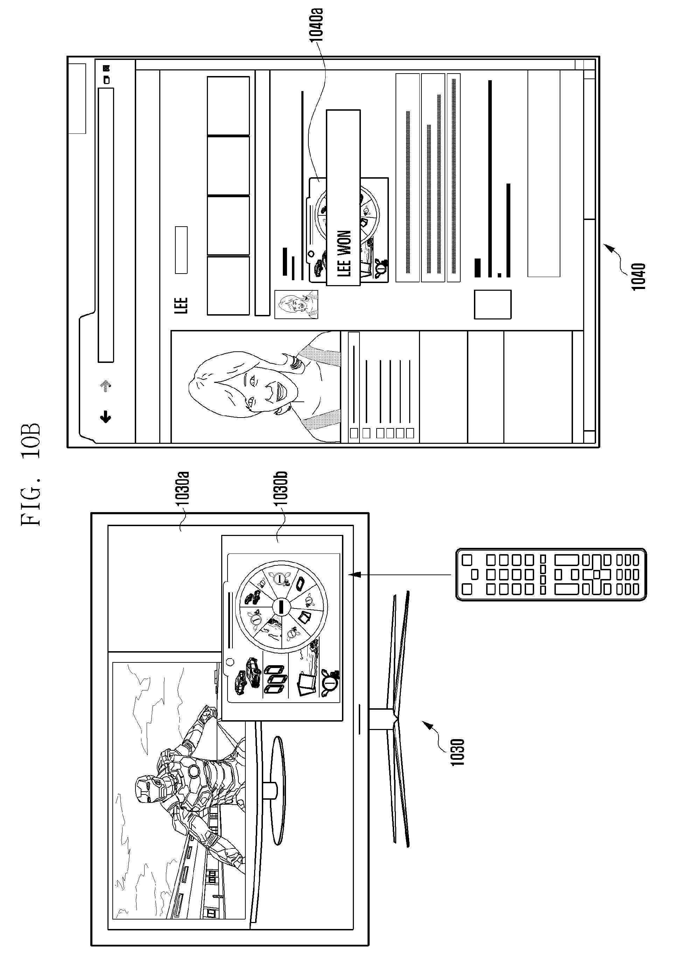

Referring to FIG. 10B, reference numeral 1030 indicates a first client such as a smart TV and reference numeral 1040 indicates a webpage of a web server. The smart TV 1030 displays broadcasting contents 1030a and additional information 1030b together. When the user selects the additional information 1030b through an external device such as a remote control, the smart TV 1030 acquires detailed information corresponding to the additional information 1030b. For example, the additional information 1030b is related to an application for an event, and the detailed information is a page in which the event is applied. When the smart TV 1030 transmits the event application page to the smart phone, the user applies the event through the smart phone. When applying the event, the user inputs an SNS account as well as user information such as a user name, phone number, and address into a medium informing of an event application result. In this case, an application server provides an event winning result to a web server of the SNS account. The web server exposes the winning result 1040a to the webpage (for example, Facebook) in association with the user.

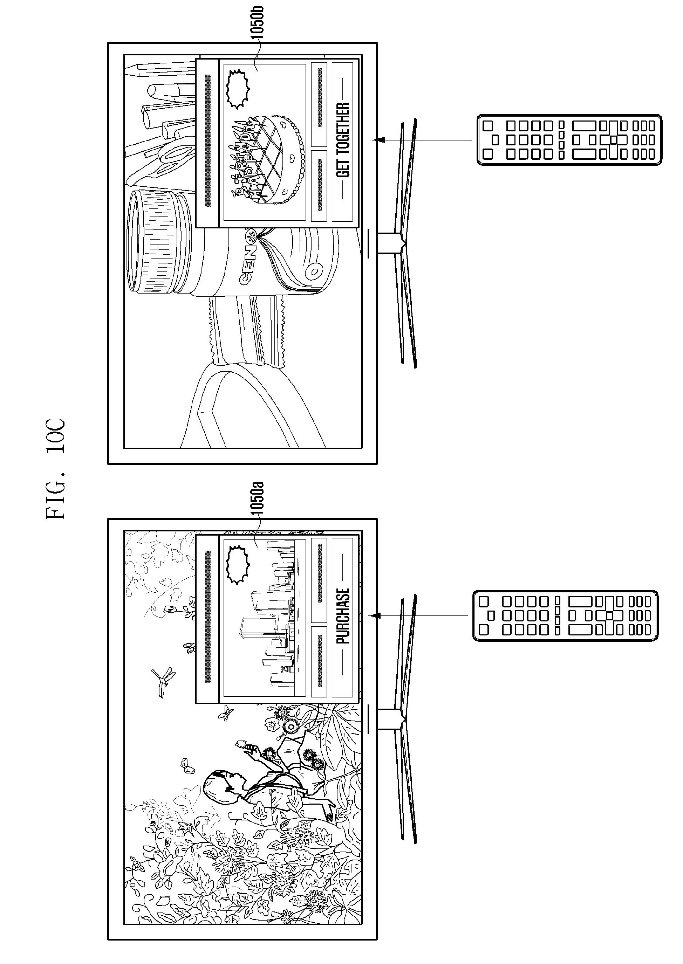

Referring to FIG. 10C, the first client displays additional information including a mission as well as the broadcasting contents. Reference numeral 1050a indicates additional information and is related to purchasing a product. When the user selects "purchase" in the additional information 1050a, the first client provides a purchase page to the smart phone of the user and allows the user to proceed with the purchase. Reference numeral 1050b indicates additional information and is related to a page such as inviting a friend. When the user selects "get together" in the additional information 1050b, the first client provides a friend inviting page to the smart phone and allows the smart phone to display a friend list of the SNS to which the user has subscribed or a chatting friend list on the smart phone.

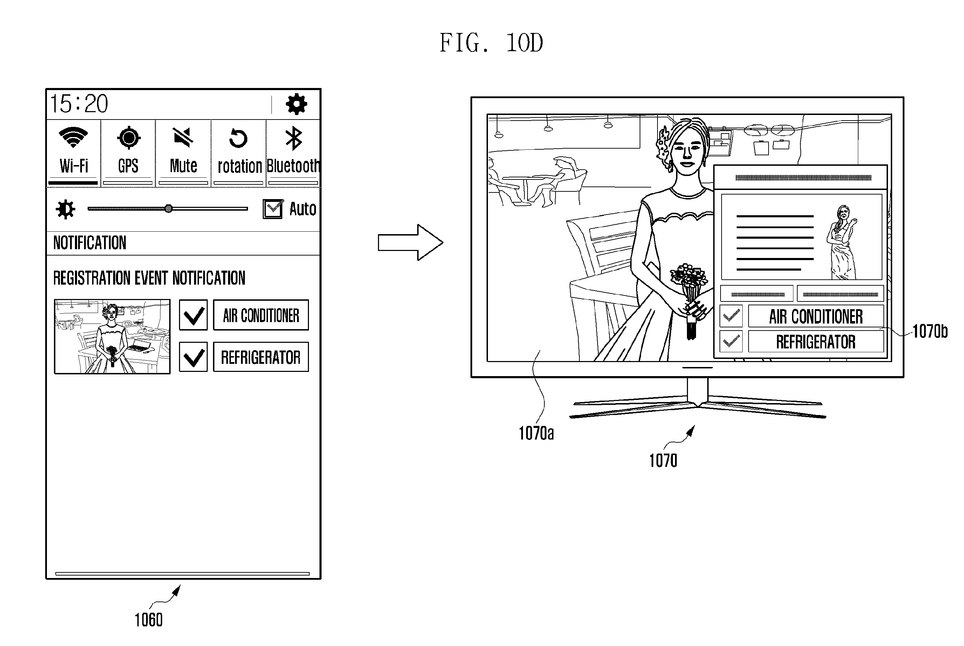

Referring to FIG. 10D, an event application (for example, an air conditioner or a refrigerator) is completed (for example, marking on a check box of the air conditioner or the refrigerator) in a second client 1060. After the event application is completed, when broadcasting contents 1070a and additional information 1070b are displayed together on the first client, information indicating that the event application has been completed (for example, marking on the check box of the air conditioner or the refrigerator) is displayed in the additional information 1070b.

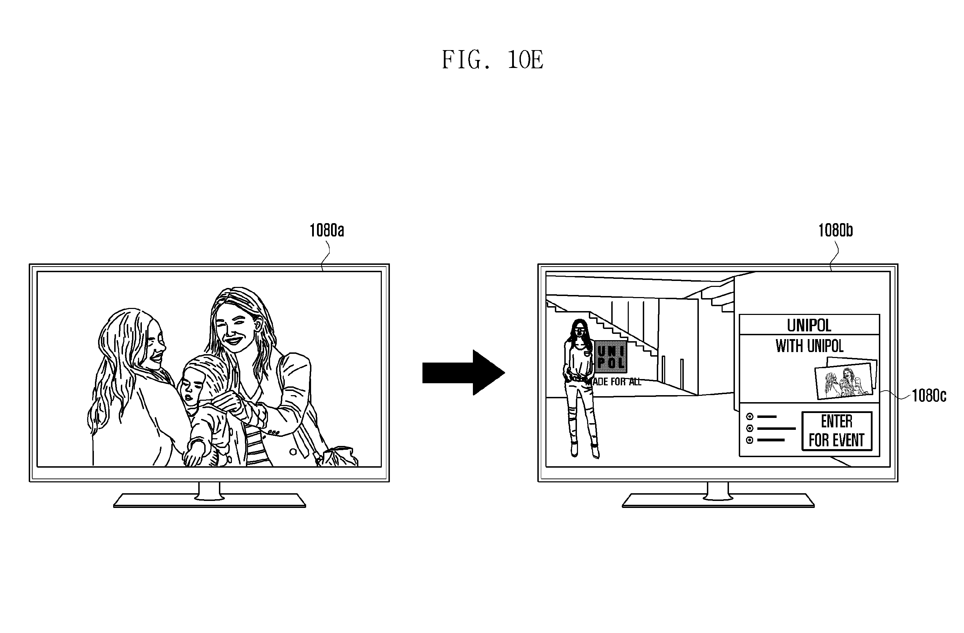

Referring to FIG. 10E, after viewing a broadcasting program 1080a (for example, broadcasting station regular program: soup opera, news, entertainment, or music show), the first client displays broadcasting contents 1080b related to the broadcasting program 1080a. At this time, the first client displays additional information 1080c related to the broadcasting program 1080a and the broadcasting contents 1080b. In general, the broadcasting contents 1080b are displayed at the beginning or middle of the broadcasting program 1080a, or before or after the broadcasting program 1080a, and the additional information 1080c related to the broadcasting program 1080a is provided when the broadcasting contents 1080b, so that the user's concentration on the advertisement increases.

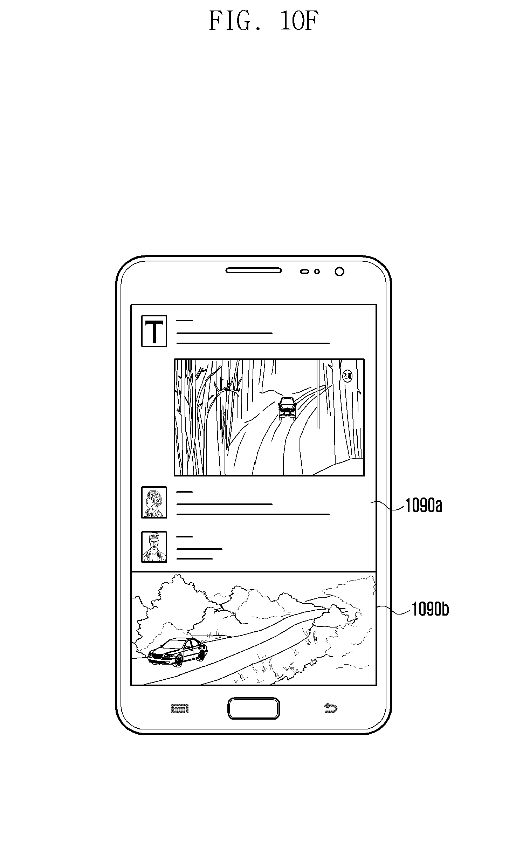

Referring to FIG. 10F, when the second client is displaying a webpage 1090a, additional information 1090b is displayed on the lower end of the webpage. The first client (for example, a smart TV) provides additional information related to the currently displayed broadcasting program or broadcasting contents to the second client (for example, a smart phone), thereby a repetitive exposure effect is expected.

According to various embodiments, each server, such as registration server 130, information provision server 140 and executive analysis server 150, can be combined to one server. The server that including at least two servers of registration server 130, information provision server 140 and executive analysis server 150 can provide functions supported by the at least two servers.

The "module" used in various embodiments of the present disclosure refers to, for example, a "unit" including one of hardware, software, and firmware, or a combination of two or more of the hardware, software, and firmware. The "module" can be interchangeably used with a term, such as unit, logic, logical block, component, or circuit. The "module" can be the smallest unit of an integrated component or a part thereof. The "module" can be the smallest unit that performs one or more functions or a part thereof. The "module" can be mechanically or electronically implemented. For example, the "module" according to various embodiments of the present disclosure includes at least one of an Application-Specific Integrated Circuit (ASIC) chip, a Field-Programmable Gate Arrays (FPGAs), and a programmable-logic device for performing operations which have been known or are to be developed hereafter.

According to various embodiments, at least some of the devices (for example, modules or functions thereof) or the method (for example, operations) according to the present disclosure are implemented by a command stored in a computer-readable storage medium in a programming module form. When the command is executed by processors, the processors perform a function corresponding to the command. The computer-readable storage media is, for example, the memory 130. At least a part of the programming module is implemented (e.g., executed) by a processor. At least some of the programming modules include, for example, a module, a program, a routine, a set of instructions or a process for performing one or more functions.

The computer readable recording medium includes magnetic media such as a hard disc, a floppy disc, and a magnetic tape, optical media such as a compact disc read only memory (CD-ROM) and a digital versatile disc (DVD), magneto-optical media such as a floptical disk, and hardware devices specifically configured to store and execute program commands, such as a read only memory (ROM), a random access memory (RAM), and a flash memory. In addition, the program instructions include high class language codes, which are executed in a computer by using an interpreter, as well as machine codes made by a compiler. The aforementioned hardware device is configured to operate as one or more software modules in order to perform the operation of various embodiments of the present disclosure, and vice versa.

A module or a programming module according to the present disclosure includes at least one of the described component elements, a few of the component elements is omitted, or additional component elements is included. Operations executed by a module, a programming module, or other component elements according to various embodiments of the present disclosure are executed sequentially, in parallel, repeatedly, or in a heuristic manner. Further, some operations are executed according to another order or are omitted, or other operations are added.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of providing information by an electronic device, the method comprising:
maintaining a fingerprint database;
extracting a fingerprint from broadcasting contents;
acquiring content identification information that corresponds to the extracted fingerprint in the fingerprint database;
transmitting a request for additional information to a first external device, the request comprising the acquired content identification information;
receiving additional information related to the acquired content identification information from thefirst external device; and
displaying the additional information.

2. The method of claim 1, wherein the broadcasting contents comprise a plurality of frames, the fingerprint database further comprising offsets corresponding to the content identification information, the offsets referring to individual frame locations defined within the broadcasting contents.

3. The method of claim 2, wherein maintaining the fingerprint database comprises:
receiving the content identification information and the fingerprint(s) according to one or more offsets from the first external device;
storing the received content identification information and the stored fingerprints according to the one or more offsets as the fingerprint database; and
controlling an update of the fingerprint database.

4. The method of claim 2 or 3, wherein extracting the fingerprint comprises:
converting at least one frame from the broadcasting contents into a digit string;
extracting the converted digit string as the extracted fingerprint; and
acquiring an offset of the extracted fingerprint based on an order of the converted frame in the broadcasting contents;
wherein the request further comprises the acquired offset.

5. The method of any of the previous claims, wherein the request further comprises feature information on the electronic device together with the content identification information.

6. The method of any of the previous claims, wherein displaying the additional information comprises:
selecting the additional information including a targeting condition that meets feature information on the electronic device among one or more pieces of the received additional information; and
displaying the selected additional information.

7. The method of claim 5 or 6, wherein the feature information includes at least one piece of device information on the electronic device, location information on the electronic device, user information on the electronic device, language information set to the electronic device, attribute information on the broadcasting contents, and information on a connection state with a second external device.

8. The method of any of the previous claims 1, wherein displaying the additional information comprises displaying the additional information together with the broadcasting contents or displaying the additional information instead of the broadcasting contents.

9. The method of any of the previous claims, further comprising:
receiving a user input for the additional information; and
transmitting detailed information related to the additional information to a second external device connected to the electronic device in response to a user input; and/or
the method further comprising:
receiving a user input for the additional information; and
transmitting communication information for communication with a second external device to the first external device and controlling the first external device to transmit detailed information related to the additional information to the second external device in response to a user input.

10. The method of any of the previous claims, further comprising collecting log information including at least one of a viewing history of the broadcasting contents, information on whether a user reacts to the additional information, and a number of times by which the additional information is displayed, and transmitting the collected log information to the first external device.

11. An electronic device, comprising:
a fingerprint database configured to storea fingerprint ;
a controller configured to extract a fingerprint from broadcasting contents and to acquire content identification information that corresponds to the extracted fingerprint in the fingerprint database;;
a communication unit configured to transmit a request for additional information to a first external device and to receive additional information related to the acquired content identification information from the first external device; and
a display unit configured to display the additional information.

12. The electronic device of claim 11, wherein the controller includes a fingerprint extraction module configured to convert at least one frame from the broadcasting contents into a digit string , to extract the converted digit string as the extracted fingerprint, and to acquire an offset of the extracted fingerprint based on an order of the converted frame in the broadcasting contents; and/or
wherein the controller includes a DB management module configured to receive a fingerprint list from the first external device through the communication unit and control an update of the fingerprint database.

13. The electronic device of claim 11 or 12, wherein the communication unit is further configured to transmit feature information on the electronic device together with the content identification information, and the controller includes a display control module configured to select the additional information including a targeting condition that meets the feature information among one or more pieces of the received additional information and controlling the display unit to display the selected additional information;
wherein the feature information preferably includes at least one piece of device information on the electronic device, location information on the electronic device, user information on the electronic device, language information set to the electronic device, attribute information on the broadcasting contents, and information on a connection state with a second external device.

14. The electronic device of any of the claims 11-13, wherein the controller is further configured to control the display unit to display the additional information instead of the broadcasting contents when the additional information corresponds to a video, and control the display unit to display the additional information together with the broadcasting contents when the additional information is not the video.

15. The electronic device of any of the claims claim 11-14, wherein the controller includes a function performance module configured to transmit detailed information related to the additional information to a second external device through the communication unit in response to a user input for the additional information;
wherein the function performance module is more preferably further configured to collect log information including at least one of a viewing history of the broadcasting contents, information on whether a user reacts to the additional information, and a number of times by which the additional information is displayed, and transmit the collected log information to the first external device through the communication unit.
